# EUROPÄISCHE PATENTSCHRIFT

(11) **EP 1 112 491 B1**
(45) Veröffentlichungstag und Bekanntmachung des Hinweises auf die Patenterteilung: **20.08.2008**
(21) Anmeldenummer: 00954295.2
(22) Anmeldetag: 29.06.2000
(51) Int. Cl.: G01N 27/407

(54) **MESSFÜHLER ZUR BESTIMMUNG EINER KONZENTRATION VON GASKOMPONENTEN IN GASGEMISCHEN**
MEASURING SENSOR FOR THE DETERMINATION OF A CONCENTRATION OF GAS CONSTITUENTS IN GASEOUS MIXTURES
CAPTEUR DE MESURE POUR LA DETERMINATION D'UNE CONCENTRATION DE COMPOSANTS GAZEUX DANS DES MELANGES GAZEUX

(30) Priorität: 09.07.1999 DE 19932048
(43) Veröffentlichungstag der Anmeldung: 04.07.2001
(73) Patentinhaber: ROBERT BOSCH GMBH, 70442 Stuttgart (DE)
(72) Erfinder: SCHNEIDER, Jens, Stefan, Anderson, SC 29621 (US); HOETZEL, Gerhard, D-70376 Stuttgart (DE); SCHUMANN, Bernd, D-71277 Rutesheim (DE); MOSER, Thomas, D-71701 Schwieberdingen (DE)
(86) Internationale Anmeldenummer: PCT/DE2000/002124
(87) Internationale Veröffentlichungsnummer: WO 2001/004616

(56) Entgegenhaltungen:
- EP-A- 0 851 226
- EP-A- 0 919 808
- DE-A- 2 852 638
- DE-A- 4 408 361
- DE-A- 4 408 504

## Beschreibung

Die Erfindung betrifft einen Meßfühler zur Bestimmung einer Konzentration von Gaskomponenten in Gasgemischen mit den im Oberbegriff des Anspruchs 1 genannten Merkmalen.

### Stand der Technik

Meßfühler zur Bestimmung der Konzentration von Gaskomponenten in Gasgemischen, insbesondere in Gasen von verbrennungskraftmaschinen, sind bekannt. Derartige Meßfühler dienen beispielsweise dazu, über eine Bestimmung einer Sauerstoffkonzentration und/oder einer Konzentration reduzierender Gaskomponenten wie HC oder CO eine Einstellung eines Kraftstoff-LuftGemisches zum Betreiben der Verbrennungskraftmaschine vorzugeben. Eine Charakterisierung eines spezifischen Betriebszustandes kann dabei mittels eines Verhältnisses der Sauerstoffkonzentration zu der Konzentration des Kraftstoffs erfolgen. Liegt der Kraftstoff in einem stöchiometrischen Überschuß vor (fetter Bereich), so tritt im Abgas nur eine geringe Menge an Sauerstoff gegenüber anderen, teilweise unverbrannten Bestandteilen auf. Im sogenannten mageren Bereich, bei dem der Sauerstoff der Luft in dem Kraftstoff-Luft-Gemisch überwiegt, ist eine Sauerstoffkonzentration in dem Abgas entsprechend hoch.

Zur Bestimmung der Sauerstoffkonzentration im Abgas sind sogenannte Lambda-Sonden bekannt, die in einem mageren Bereich einen Lambdawert > 1, im fetten Bereich < 1 und im stöchiometrischen Bereich einen Lambdawert = 1 detektieren. Eine elektrochemische Meßzelle des Meßfühlers liefert hierbei in bekannter Weise eine Detektionsspannung, die einer Schaltungsanordnung zugeführt wird. Die Detektionsspannung ist abhängig von einem Sauerstoffkonzentrationsunterschied an den wenigstens zwei eingesetzten Meßelektroden. Zwischen den Meßelektroden ist ein Festelektrolytkörper angeordnet, der für Sauerstoffionen leitfähig ist. Entsprechend der Sauerstoffkonzentration im Abgas steigt die Detektionsspannung an, oder diese sinkt ab.

Weiter sind Meßfühler bekannt, die zur Bestimmung der Konzentration reduzierender Gaskomponenten benutzt werden. Diese Meßfühler sind häufig komponentenspezifisch, das heißt, für jede zu detektierende Gaskomponente (H₂, HC und CO) existiert ein gesonderter Sensor.

Beide Arten von Meßfühlern liefern entweder einen Wert für die Sauerstoffkonzentration oder die Konzentration der reduzierenden Gaskomponenten. Sie liefern also Werte, die für sich genommen nur indirekt auf eine Lage des Lambdawertes schließen lassen. So kann ein Meßfühler zur Bestimmung von Sauerstoffkonzentrationen eine bestimmte absolute Sauerstoffkonzentration liefern, von der ein Rückschluß auf die Zusammensetzung des Kraftstoff-LuftGemisches erfolgen kann.

Eine präzisere Einstellung einer Regellage der Verbrennungskraftmaschine kann durch eine direkte Ermittlung des Lambdawertes erfolgen. Dabei ist es von Vorteil, anstelle von zwei separaten Meßfühlern für die jeweilige Gaskomponente einen kompakten Meßfühler zur Verfügung zu stellen, der beiden Sensorfunktionen Folge tragen kann. Bisherige Ansätze zur Unterbringung mehrerer Sensorfunktionen auf einem Substrat haben ein kompliziertes Layout oder einen komplizierten Schichtaufbau zur Folge, wodurch eine erhöhte Störanfälligkeit auftritt und hohe Herstellungskosten entstehen.

Die in dem Abgas der Verbrennungskraftmaschinen auftretenden reduzierenden Gaskomponenten stehen mit dem Sauerstoff in einem thermodynamischen Gleichgewicht. Mit zunehmender motorferner Anordnung der Meßfühler in einem Abgaskanal der Verbrennungskraftmaschine sinkt auch eine Temperatur des Abgases, und somit wird die Einstellung des thermodynamischen Gleichgewichts aus kinetischer Sicht erschwert. Es ist bekannt, die Gleichgewichtsreaktion mit Übergangsmetallen zu katalysieren. Insbesondere haben sich platin-, palladium- oder rhodiumhaltige Katalysatoren als geeignet gezeigt. Im Zuge einer Anwendung dieser Metalle als ein Elektrodenmaterial für die Meßelektroden von Meßfühlern zeigt es sich als besonders vorteilhaft, solcherlei katalytische Aktivität auf einer dem Abgas ausgesetzten Meßelektrode zu besitzen. Auf diese Weise kann die Sauerstoffkonzentration an dieser Meßelektrode sehr gering gehalten werden, woraus sich eine sehr hohe Potentialdifferenz zu einer weiteren, einem Referenzgas ausgesetzten Elektrode ergibt. Eine solche, die Gleichgewichtseinstellung des Gasgemisches katalysierende Meßelektrode (Gleichgewichtselektrode) ermöglicht es allerdings nicht, die Konzentration der reduzierenden Gaskomponenten zu erfassen.

Es ist daher bekannt, der dem Gasgemisch ausgesetzten Meßelektrode Materialien zuzusetzen, die eine katalytische Wirkung der Meßelektrode inhibieren. So zeigt die DE 44 08 361 C2 eine Meßelektrode, bei der durch Zusatz von Wismut, Platin, Antimon oder Blei eine Sauerstoffadsorption an einer Oberfläche der Meßelektrode ermöglicht wurde. Dadurch wurde die das Potential der Meßelektrode_ bestimmende Konzentration des Sauerstoffs an einer Dreiphasengrenzfläche der Meßelektrode bei einem Betrieb der Verbrennungskraftmaschine unter Lambda > 1 nahezu konstant gehalten. Die derart ausgebildete Meßelektrode reagiert im wesentlichen auf Sauerstoff und stellt insofern eine Nichtgleichgewichtselektrode beziehungsweise Mischpotentialelektrode dar. Eine solche Meßelektrode kann somit bei Lambda > 1 als eine Referenzelektrode verwendet werden.

Ein Sensor mit einer katalysierender Elektrode und einer nicht katalysierenden Cermet-Elektrode wird in EP0851226 beschrieben. In einigen Ausführungsformen sind außerdem Referenzelektroden vorhander, die einem Referenzgas ausgesetzt sind.

Weiterhin ist aus der DE 44 08 504 bekannt, eine derartige Mischpotentialelektrode durch Beimengung von Gold und/oder Silber auszubilden. Durch die Beimengung von Gold und/oder Silber wird die katalytische Umsetzung durch Oxidation von CO und/oder HC und Reduktion von NOₓ gehemmt. An der Meßelektrode wird die hohe Affinität dieser Metalle zu den reduzierenden Gaskomponenten ausgenutzt. Durch Adsorption der reduzierenden Gaskomponenten an der Oberfläche der Mischpotentialelektrode kann in einem Betrieb der Verbrennungskraftmaschine bei Lambda < 1 die Konzentration des Sauerstoffs und damit das Potential der Mischpotentialelektrode beinahe konstant gehalten werden. Auf diese Weise läßt sich eine derartige Meßelektrode bei Lambda < 1 als Referenzelektrode nutzen. Nachteilig an den beiden gezeigten Ausgestaltungen der Mischpotentialelektroden ist, daß sie lediglich konstante Potentiale für zwei Extremlagen des Lambdawertes ermöglichen und somit den für die Steuerung der Regellage der Verbrennungskraftmaschine besonders interessanten Bereich bei Lambdawerten ≈ 1 aussparen. Weiterhin ist es damit nicht möglich, mit ein und derselben Meßelektrode einerseits die Sauerstoffkonzentration oder andererseits die Konzentration der reduzierenden Gaskomponenten zu bestimmen.

### Vorteile der Erfindung

Durch den erfindungsgemäßen Meßfühler zur Bestimmung einer Konzentration von Gaskomponenten in Gasgemischen mit einer eine Gleichgewichtseinstellung des Gasgemisches nicht oder nur wenig katalysierenden ersten Meßelektrode (Mischpotentialelektrode) und einer die Gleichgewichtseinstellung des Gasgemisches katalysierenden zweiten Meßelektrode (Gleichgewichtselektrode) sowie einem zwischen den beiden Meßelektroden angeordneten sauerstoffionenleitenden Festelektrolyten, wobei die beiden Meßelektroden dem Gasgemisch ausgesetzt sind, und den Merkmalen des Anspruchs 1 kann durch eine Anordnung von nur zwei Meßelektroden entweder die Konzentration von Sauerstoff oder die Konzentration einer reduzierenden Gaskomponente erfaßt werden. Dadurch, daß zumindest die erste Meßelektrode eine Cermetelektrode ist, wobei wenigstens eine Metalloxidkomponente der Cermetelektrode reversibel Sauerstoff einlagern kann, wird das Potential dieser ersten Meßelektrode in dem Bereich um Lambda ≈ 1 nahezu konstant gehalten. Somit stellt die erste Meßelektrode in diesem Betriebszustand der Verbrennungskraftmaschine die Referenzelektrode dar, während die zweite Meßelektrode als Arbeitselektrode dient. Wechselt der Betriebszustand der Verbrennungskraftmaschine in einem Bereich mit Lambda > 1, so ist das Potential der zweiten Meßelektrode nahezu konstant, während das Potential der ersten Meßelektrode variabel ist und im wesentlichen durch die Konzentration der reduzierenden Gaskomponenten bestimmt wird. Somit ist die zweite Meßelektrode in diesem Fall die Referenzelektrode und die erste Meßelektrode die Arbeitselektrode.

Geeignete Metalloxidkomponenten für die erste Meßelektrode sind beispielsweise Mischoxide wie TiNiNbOₓ oder FeNiMnO₄. Ferner kann zusätzlich ein Edelmetall wie Gold in die erste Meßelektrode eingebracht werden. Dadurch ist es möglich, das Potential der ersten Meßelektrode sehr genau einer gegebenen Applikationsanforderung anzupassen.

Erfindungsgemäß wird den beiden dem Gasgemisch ausgesetzten Meßelektroden eine zusätzlich an einem Referenzgas angeordnete Referenzelektrode zugeordnet. Beide Meßelektroden sind ausgehend von einer Außenseite des Meßfühlers in Richtung der Referenzelektrode nacheinanderfolgend in verschiedenen Schichten anzuordnen. Dabei muß eine Schicht zwischen den beiden Meßelektroden hinreichend porös sein, so daß sie eine ausreichend schnelle Einstellung der sich laufend wechselnden Konzentration der einzelnen Abgaskomponenten erlaubt. Die eine Meßelektrode entspricht dabei der Mischpotentialelektrode auf Basis sauerstoffspeichernder Metalloxidkomponenten und die andere der Meßelektroden ist als eine Gleichgewichtselektrode ausgelegt.

Es hat sich als vorteilhaft erwiesen, die Mischpotentialelektrode abgasnäher anzuordnen, da sie ein besonders stabiles und konstantes Potential bei schnellen Gaswechseln um Lambda = 1 aufweist. Neben einer von sich aus katalytisch aktiven Gleichgewichtselektrode ist denkbar, zusätzliche Katalysatoren oder Promotoren in die poröse Zwischenschicht einzubringen, selbstverständlich nicht in einem unmittelbaren Bereich der Mischpotentialelektrode. Auf diese Weise kann die Gleichgewichtseinstellung des Gasgemisches bewußt beeinflußt werden und es ergibt sich die Möglichkeit, für die Gleichgewichtselektrode auch andere, nicht katalytisch aktive Metallkomponenten einzusetzen.

Mit Hilfe dieser bevorzugten Anordnung mit insgesamt nur drei Elektroden können in bestimmten Betriebszuständen die Konzentrationen von Sauerstoff und den reduzierenden Gaskomponenten gleichzeitig und somit die Lage des Lambdawertes direkt bestimmt werden. Dies ermöglicht eine sehr viel schnellere und genauere Einstellung der Regellage der Verbrennungskraftmaschine. Weiterhin ist ein solcher Meßfühler in besonders einfacher und kostengünstiger Weise realisierbar.

Weitere bevorzugte Ausgestaltungen der Erfindung ergeben sich aus den übrigen, in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: eine schematische Schnittansicht durch einen nicht erfindungsgemäßen Meßfühler;
- Figur 2: eine schematische Schnittansicht durch einen Meßfühler, gemäß Anspruch 1

### Beschreibung der Ausführungsbeispiele

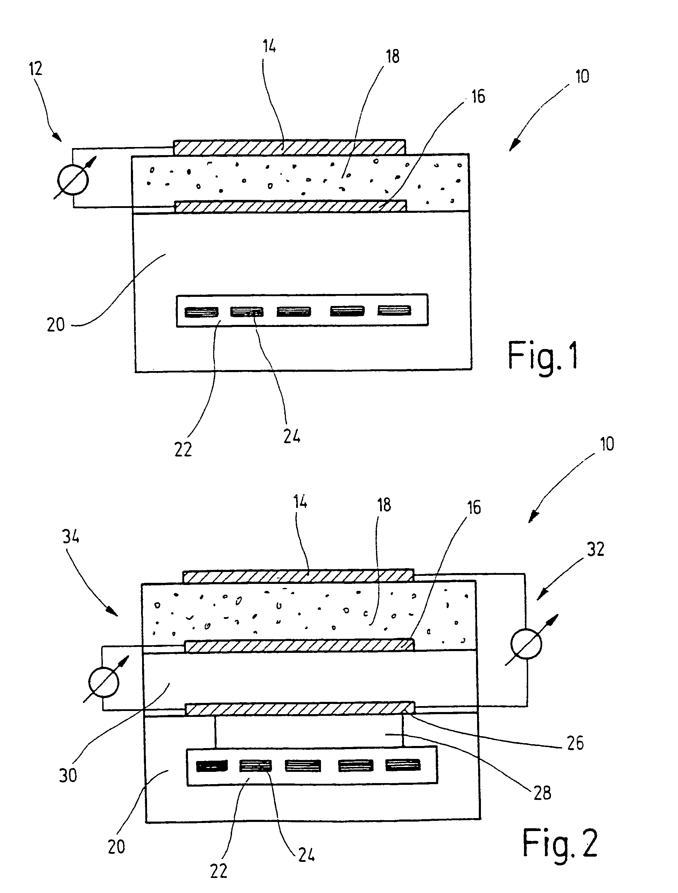

In der Figur 1 ist ein nicht erfindungsgemäßer Meßfühler 10, der zu einer Bestimmung einer Konzentration von Gaskomponenten in Gasgemischen, insbesondere in Abgasen von Verbrennungskraftmaschinen, verwendet werden kann, dargestellt. Ein solcher Meßfühler 10 besteht vorzugsweise aus einzelnen keramischen Schichten, die durch Siebdrucken, Laminieren, Schneiden, Sintern oder dergleichen bekanntermaßen strukturiert werden können. Der Meßfühler 10 beinhaltet eine elektrochemische Meßzelle 12 mit einer ersten Meßelektrode 14 und einer zweiten Meßelektrode 16, wobei sich zwischen den beiden Meßelektroden 14, 16 eine poröse sauerstoffionenleitfähige Schicht 18 erstreckt. Unterhalb der zweiten Meßelektrode 16 ist in einer zumindest gut wärmeleitfähigen Schicht 20 ein Heizelement 22 angeordnet. Das Heizelement 22 umfaßt unter anderem eine hier mäanderförmig ausgearbeitete Widerstandsbahn 24 und dient einer Einstellung beziehungsweise Steuerung einer Betriebstemperatur des Meßfühlers 10. Die zweite Meßelektrode 16 besteht aus einem edelmetallhaltigen Cermet, beispielsweise auf der Basis eines Edelmetalles wie Platin. Aufgrund einer katalytischen Aktivität dieser Edelmetalle hinsichtlich einer nachfolgend noch näher erläuterten Gleichgewichtsreaktion zwischen Sauerstoff und reduzierenden Gaskomponenten des Abgases wird diese zweite Meßelektrode 16 nachfolgend als Gleichgewichtselektrode 16 bezeichnet. Die erste Meßelektrode 14 zeigt, wie ebenfalls noch näher erläutert wird, in bestimmten durch einen Lambdawert charakterisierbaren Betriebszuständen der Verbrennungskraftmaschine keine oder so gut wie keine katalytische Aktivität und wird nachfolgend als Mischpotentialelektrode 14 bezeichnet.

Während eines Verbrennungsprozesses eines Luft-Kraftstoff-Gemisches in der Verbrennungskraftmaschine entstehen in wechselnden Anteilen reduzierende Gaskomponenten, die mit dem Sauerstoff abreagieren können und somit mit diesem in einem thermodynamischen Gleichgewicht stehen. Neben einer temperaturabhängigen Gleichgewichtslage dieser Reaktion ist für eine Einstellung des Gleichgewichts insbesondere deren Kinetik entscheidend. Grundsätzlich kann davon ausgegangen werden, daß mit zunehmend motorferner Anordnung des Meßfühlers 10 auch eine Temperatur des Abgases sinkt und somit die Einstellung des thermodynamischen Gleichgewichts aus kinetischer Sicht erschwert ist. Durch die in der Gleichgewichtselektrode 16 verwendeten Edelmetalle wie Platin, Palladium und Rhodium, wird diese Gleichgewichtseinstellung katalysiert. Somit wird ein Potential der Gleichgewichtselektrode 16 im wesentlichen durch eine Konzentration des Sauerstoffs bestimmt.

Das Potential der Mischpotentialelektrode 14 dagegen ist zumindest bereichsweise nicht von der Konzentration des Sauerstoffs abhängig, sondern ist eine Funktion der Konzentration der reduzierenden Gaskomponenten. So läßt sich durch eine gezielte Auswahl wenigstens einer Metalloxidkomponente, die reversibel Sauerstoff einlagern kann, das Potential der Mischpotentialelektrode 14 beeinflussen. Eine solche Mischpotentialelektrode 14 kann dann beispielsweise weitestgehend aus TiNiNbOₓ oder FeNiMnO₄ bestehen. Denkbar ist aber auch, Metalloxide wie Mn₂O₃ und CeO₂ einzusetzen. Des weiteren kann die Cermetelektrode als metallische Komponente auch ein Edelmetall, wie Gold oder Silber, beigemengt werden. Auf diese Weise läßt sich das Potential der Mischpotentialelektrode 14 individuell gegebenen Applikationsanforderungen anpassen.

In einem Betriebsmodus der Verbrennungskraftmaschine mit λ ≈ 1 wird die Sauerstoffkonzentration unmittelbar an eine Oberfläche der Mischpotentialelektrode 14 durch die zugesetzte Metalloxidkomponenten nahezu konstant gehalten. Eine Kapazität der Aus- und Einlagerungsprozesse von Sauerstoff in eine Mischpotentialelektrode 14 bestimmt einen Lambdabereich, in dem das Potential der Mischpotentialelektrode 14 nahezu konstant ist. Dagegen ist das Potential an der Gleichgewichtselektrode 16 in einem solchen Betriebsmodus der Verbrennungskraftmaschine starken Änderungen ausgesetzt, da sich gerade in einem solchen Lambdabereich große Sauerstoffkonzentrationsänderungen ergeben. Somit kann bei λ ≈ 1 die Mischpotentialelektrode 14 als eine Referenzelektrode verwendet werden, während die Gleichgewichtselektrode 16 als eine Arbeitselektrode 16 genutzt werden kann.

Über die elektrochemische Meßzelle 12 kann dann eine Detektionsspannung U abgegriffen werden, die ein direktes Maß für die Sauerstoffkonzentration des Gasgemisches ist.

Wechselt der Betriebsmodus der Verbrennungskraftmaschine in einen Bereich mit λ > 1, so ändert sich das Potential der Mischpotentialelektrode 14 stark bei einer Änderung der Konzentration der reduzierenden Gaskomponenten. Das Potential der Gleichgewichtselektrode 16 ist jedoch bei hohen Sauerstoffkonzentrationen nahezu konstant. Somit fungiert in diesem Fall die Gleichgewichtselektrode 16 als Referenzelektrode und die Mischpotentialelektrode 14 dient als Arbeitselektrode. Über die elektrochemische Meßzelle 12 kann dann eine Detektionsspannung U abgegriffen werden, die der Konzentration der reduzierenden Gaskomponenten entspricht.

Prinzipiell kann sich eine Anordnung der beiden Meßelektroden 14, 16 auch in umgekehrter Reihenfolge als in der dargestellten Form ergeben, jedoch können bei der gezeigten Anordnung in der Schicht 18 zusätzliche Promotoren oder Katalysatoren eingebracht werden, die eine Gleichgewichtseinstellung unterstützen. Auf diese Weise kann eine Zusammensetzung der Gleichgewichtselektrode 16 in einem hohem Maße variiert werden und es kann beispielsweise auf relativ kostspielige Edelmetalle wie Platin oder Palladium verzichtet werden.

Die Figur 2 zeigt die erfindungsgemäße Weiterentwicklung des Meßfühlers 10. Neben dem bereits erläuterten beiden Meßelektroden 14, 16 weist der Meßfühler 10 eine weitere Referenzelektrode 26 auf. Die Referenzelektrode 26 liegt oberhalb eines mit einem Referenzgas gefüllten Referenzkanal 28. Die Heizeinrichtung 22 dient dabei einerseits zum Beheizen des Meßfühlers 10 als auch zum Beheizen des Referenzgases. Zwischen der Referenzelektrode 26 und der Gleichgewichtselektrode 16 befindet sich eine Schicht 30, die aus einem sauerstoffionenleitfähigen Festelektrolyten besteht.

Ein solcher Meßfühler 10 besitzt nun eine erste elektrochemische Meßzelle 32, die die Mischpotentialelektrode 14 und die Referenzelektrode 26 umfaßt und eine zweite elektrochemische Meßzelle 34, die die Gleichgewichtselektrode 16 und die Referenzelektrode 26 umfaßt.

Mit Hilfe dieser sehr einfachen Anordnung mit lediglich drei Elektroden kann in Abhängigkeit von dem Betriebsmodus der Verbrennungskraftmaschine gleichzeitig die Konzentration von Sauerstoff als auch die Konzentration der reduzierenden Gaskomponenten gemessen werden. Auf diese Weise kann sehr schnell und mit hoher Genauigkeit ein Lambdawert ermittelt werden.

So ist beispielsweise bei einem Lambdawert > 1 das Potential der Mischpotentialelektrode 14, wie bereits erwähnt, im wesentlichen abhängig von der Konzentration der reduzierenden Gaskomponenten und kann somit über die elektrochemische Messzelle 32 als eine Detektionsspannung U₁ abgegriffen werden. In dem gleichen Betriebsmodus lässt sich ebenso eine Potentialdifferenz zwischen der Gleichgewichtselektrode 16 und der Referenzelektrode 26 erfassen, sofern das Referenzgas eine genügend unterschiedliche Sauerstoffkonzentration besitzt. Die Potentialdifferenz führt dann zu einer der elektrochemischen Messzelle 34 abgreifbaren Detektionsspannung U₂, die ein direktes Maß der Sauerstoffkonzentration ist.

Weitere vorteilhafte Ausführungsformen der vorliegenden Erfindung sind den abhängigen Patentansprüchen zu entnehmen.

## Patentansprüche

1. Messfühler zur Bestimmung einer Konzentration von Gaskomponenten in Gasgemischen mit einer eine Gleichgewichtseinstellung des Gasgemisches nicht oder nur wenig katalysierenden ersten Messelektrode (14) in Form einer Mischpotentialelektrode und einer die cleichgewichtseinstellung des Gasgemisches katalysierenden zweiten Messelektrode (16) in Form einer Gleichgewichtselektrode sowie einem zwischen den beiden Messetelekroden angeordneten sauerstoffionenleitenden Festelektrolyten (18), wobei die beiden Messelektroden dem Gasgemisch ausgesetzt sind und wobei zumindest die erste Messelektrode (14) eine Cermetelektrode ist, die mindestens eine reversible sauerstoffeinlagernde Metalloxidkomponente aufweist, wobei der sauerstoffionenleitende Festelektrolyt in einer Schicht (18) des Messfühlers (10) integriert ist, **dadurch gekennzeichnet dass** diese Schicht (18) porös ist, dass eine der Messelektroden (14) auf einer dem Gasgemisch zugewandten Seite des Messfühlers (10) angeordnet ist und dass sich die andere Messelektrode (16) zwischen der einem Referenzgas ausgesetzten Referenzelektrode (26) und der dem Gasgemisch zugewandten Messelektrode (14) befindet, wobei sich zwischen den beiden Messelektroden (14, 16) die poröse Schicht (18) erstreckt.

2. Meßfühler nach Anspruch 1, **dadurch gekennzeichnet, daß** die Mischpotentialelektrode (14) weitestgehend aus Mischoxiden der Zusammensetzung TiNiNbOₓ oder FeNiMnO₄ besteht.

3. Meßfühler nach Anspruch 1, **dadurch gekennzeichnet, daß** die Metalloxidkomponente CeO₂ und/oder Mn₂O₃ ist.

4. Meßfühler nach einem der Ansprüche 1 bis 3, **dadurch gekennzeichnet, daß** der Mischpotentialelektrode (14) Gold und/oder Silber zugesetzt ist.

5. Meßfühler nach Anspruch 1, **dadurch gekennzeichnet, daß** die Schicht (18) Promotoren und/oder Katalysatoren zumindest bereichsweise beinhaltet.

6. Meßfühler nach Anspruch 1, **dadurch gekennzeichnet, daß** die dem Gasgemisch zugewandte Meßelektrode die Mischpotentialelektrode (14) ist.

## Claims

1. Sensing element for determining a concentration of gas components in gas mixtures having a first measuring electrode (14), in the form of a mixed potential electrode, which does not catalyse, or catalyses only to a small extent, an equilibrium setting of the gas mixture, and having a second measuring electrode (16), in the form of an equilibrium electrode, which catalyses the equilibrium setting of the gas mixture, and having a solid electrolyte (18) which conducts oxygen ions and is arranged between the two measuring electrodes, the two measuring electrodes being exposed to the gas mixture and at least the first measuring electrode (14) being a cermet electrode which has at least one reversible metal oxide component which stores oxygen, the solid electrolyte which conducts oxygen ions being integrated in a layer (18) of the sensing element (10), **characterized in that** this layer (18) is porous, **in that** one of the measuring electrodes (14) is arranged on a side of the sensing element (10) which faces the gas mixture, and **in that** the other measuring electrode (16) is situated between the reference electrode (26) which is exposed to a reference gas and the measuring electrode (14) which faces the gas mixture, the porous layer (18) extending between the two measuring electrodes (14, 16).

2. Sensing element according to Claim 1, **characterized in that** the mixed potential electrode (14) comprises as far as possible mixed oxides of the composition TiNiNbOₓ or FeNiMnO₄.

3. Sensing element according to Claim 1, **characterized in that** the metal oxide component is CeO₂ and/or Mn₂O₃.

4. Sensing element according to one of Claims 1 to 3, **characterized in that** the mixed potential electrode (14) has gold and/or silver added to it.

5. Sensing element according to Claim 1, **characterized in that** the layer (18) comprises promoters and/or catalysts at least in regions.

6. Sensing element according to Claim 1, **characterized in that** the measuring electrode which faces the gas mixture is the mixed potential electrode (14).

## Revendications

1. Capteur de mesure pour déterminer la concentration de composants gazeux dans des mélanges gazeux avec une première électrode de mesure (14) ne catalysant pas ou peu le réglage de l'équilibre du mélange gazeux, cette électrode étant sous la forme d'une électrode à potentiel mixte ainsi qu'une seconde électrode de mesure (16) catalysant le réglage de l'équilibre du mélange gazeux, cette seconde électrode ayant la forme d'une électrode d'équilibre, ainsi qu'un électrolyte solide (18) conducteur d'ions d'oxygène, installé entre les deux électrodes de mesures,
les deux électrodes de mesure étant exposées au mélange gazeux et au moins la première électrode de mesure (14) est une électrode cermet comportant au moins un composant d'oxyde métallique à stockage réversible d'oxygène,
l'électrolyte solide à conduction d'ions d'oxygène étant intégré dans une couche (18) du capteur de mesure (10),
**caractérisé en ce que**
cette couche (18) est poreuse,
l'une des électrodes de mesure (14) est installée sur le côté du capteur de mesure (10) exposé au mélange gazeux et
l'autre électrode de mesure (16) se trouve entre l'électrode de référence (26) exposée à un gaz de référence et l'électrode de mesure (14) tournée vers le mélange gazeux, et
la couche poreuse (18) s'étend entre les deux électrodes de mesure (14, 16).

2. Capteur de mesure selon la revendication 1,
**caractérisé en ce que**
l'électrode de potentiel mixte (14) se compose très largement d'un mélange d'oxydes correspondant à la composition TiNiNbOₓ ou FrNiMnO₄.

3. Capteur de mesure selon la revendication 1,
**caractérisé en ce que**
le composant d'oxyde métallique est CeO₂ et/ou Mn₂O₃.

4. Capteur de mesure selon l'une des revendications 1 à 3,
**caractérisé en ce que**
l'électrode de potentiel mixte (14) comporte en plus de l'or et/ou de l'argent.

5. Capteur de mesure selon la revendication 1,
**caractérisé en ce que**
la couche (18) contient au moins par zone des promoteurs et/ou des catalyseurs.

6. Capteur de mesure selon la revendication 1,
**caractérisé en ce que**
l'électrode de mesure exposée au mélange gazeux est l'électrode de potentiel mixte (14).
